# FASCICULE DE BREVET EUROPEEN

(11) **EP 3 060 391 B1**
(45) Date de publication et mention de la délivrance du brevet: **01.11.2017**
(21) Numéro de dépôt: 14824869.3
(22) Date de dépôt: 20.10.2014
(51) Int. Cl.: B32B 7/12, F16B 11/00, F16B 7/02, B32B 5/14, B32B 3/26, B32B 33/00

(54) **ASSEMBLAGE COLLÉ MUNI D'UNE COUCHE INTERMÉDIAIRE DE DÉFORMATION À SOUPLESSE VARIABLE**
VERBUNDENE ANORDNUNG MIT EINER ZWISCHENDEFORMATIONSSCHICHT MIT VARIABLER FLEXIBILITÄT
BONDED ASSEMBLY PROVIDED WITH A INTERMEDIATE DEFORMATION LAYER WITH VARIABLE FLEXIBILITY

(30) Priorité: 21.10.2013 FR 1360239
(43) Date de publication de la demande: 31.08.2016
(73) Titulaire: Cold Pad, 75014 Paris (FR)
(72) Inventeur: COURT, Jean-Philippe, F-75014 Paris (FR)
(74) Mandataire: Cabinet Plasseraud
(86) Numéro de dépôt international: PCT/FR2014/052664
(87) Numéro de publication internationale: WO 2015/059394

(56) Documents cités:
- EP-A1- 0 433 513
- FR-A1- 2 947 018
- FR-A2- 2 157 880
- FR-A5- 2 117 023
- US-A- 3 545 795
- DATABASE WPI Week 199331 Thomson Scientific, London, GB; AN 1993-248400 XP002727452, & SU 1 750 639 A1 (TEXTILE LIGHT IND CORRESPONDENCE INST) 30 juillet 1992 (1992-07-30)

## Description

### Domaine technique

La présente invention concerne les techniques de réalisation d'assemblages collés.

Elle trouve des applications dans des domaines très variés parmi lesquels on peut citer la connexion d'un élément à un substrat, notamment à un substrat sur lequel aucun élément d'accrochage n'a été initialement prévu, ou encore le renforcement de structures ayant besoin d'être rendues plus résistantes afin de réparer ou prévenir l'apparition de défauts structurels.

### Etat de la technique

Dans le domaine des assemblages collés, il peut être utilisé un adhésif pour solidariser au moins deux substrats. C'est le cas notamment dans les solutions de renforcement de structure, souvent réalisées en appliquant un renfort métallique ou composite (premier substrat) sur la structure (deuxième substrat) par l'intermédiaire de l'adhésif. L'adhésif peut être une résine et il est généralement disposé aux contacts des deux substrats afin d'assurer un maintien mécanique de l'un avec l'autre, formant ainsi un assemblage collé. Le document FR 2 947 018 A1 décrit un assemblage collé de ce type. Or, l'assemblage collé peut être soumis à des forces extérieures, provoquant notamment des déformations différentielles entre les substrats. A cet effet, il convient généralement que l'adhésif assure au minimum deux fonctions :
- adhérer à chacun des deux substrats (fonction première souhaitée) et
- absorber les contraintes inhérentes aux déformations différentielles (fonction secondaire subie).

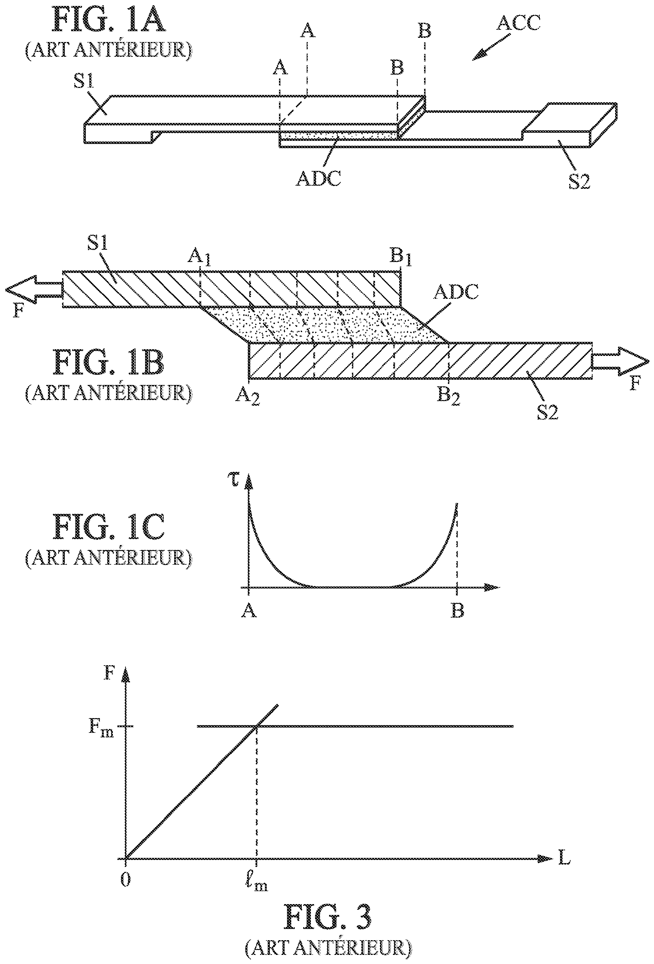

A la **figure 1A**, il a été illustré un exemple d'assemblage collé classique ACC comprenant un premier substrat S1 et un deuxième substrat S2, lesquels substrats sont solidarisés par l'intermédiaire d'un adhésif classique ADC. Des repères A et B sont représentés aux coins de l'adhésif ADC pour observer ci-après un exemple de déformation subi par l'adhésif.

On a illustré sur la **figure 1B** un exemple de vue en coupe de l'assemblage collé ACC lorsque celui-ci est soumis à des forces F de déformation (par exemple des forces opposées appliquées respectivement aux substrats S1 et S2). L'adhésif ADC se déforme sous l'influence des contraintes imposées par les forces F. Les déformations les plus prononcées apparaissent habituellement aux bords de l'adhésif ADC.

A la **figure 1C**, on a représenté un exemple d'évolution des contraintes en cisaillement τ, inhérentes aux forces F appliquées, subies par l'adhésif ADC entre les repères A et B. Les déplacements différentiels des substrats S1 et S2 génèrent des contraintes en cisaillement et en pelage qui sont élevées notamment dans la région des bords de l'adhésif ADC. En revanche, il convient de constater que l'adhésif ADC est peu, voire dans certains cas aucunement, contraint dans une zone centrale entre les repères A et B.

On comprendra qu'une corrélation existe entre la déformation de l'adhésif ADC observé à la figure 1B et les contraintes subies par celui-ci comme représenté à la figure 1C. Cette corrélation est aussi connue sous le nom de « effet de bord ». La déformation et donc les contraintes localisées aux bords de l'adhésif impactent significativement l'intégrité de l'adhésif ADC sur ces zones, rendant l'assemblage collé ACC vulnérable aux déformations différentielles précitées.

Les capacités mécaniques de l'assemblage collé sont de ce fait limitées, et d'autant plus lorsque les déformations différentielles auxquelles est exposé l'assemblage deviennent élevées.

Ce phénomène apparait également lorsque l'assemblage collé est destiné au renfort d'une structure. En effet, l'adhésif peut alors être soumis à des déformations inhérentes aux mouvements de la structure à renforcer.

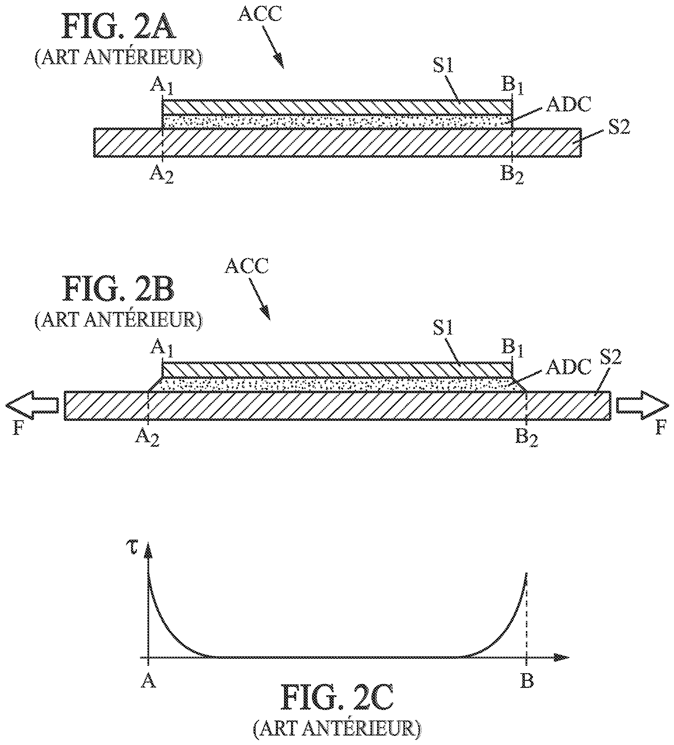

Les **figures 2A à 2C** illustrent à titre d'exemple le premier substrat S1 ayant pour rôle de renforcer le deuxième substrat S2 qui peut être un pan de structure. Il convient de constater que lorsque le deuxième substrat S2 est soumis à des déformations sous la contrainte de forces F par exemple (produites par des déformations de la structure typiquement), l'adhésif absorbe au moins en partie les déformations différentielles, générant des contraintes de cisaillement τ et de pelage σ élevées au niveau des bords de l'adhésif (aux repères A et B et à leur voisinage).

Pour renforcer les capacités mécaniques de l'assemblage collé limitées par ces contraintes localisées, une solution peut consister à augmenter la surface d'adhésion de l'adhésif avec celle des substrats, plus particulièrement en allongeant la longueur de cette surface (i.e. augmentation de la distance entre les repères A et B). En effet, il a été constaté qu'avec une telle augmentation, les capacités mécaniques de l'assemblage collé étaient améliorées, tout au moins jusqu'à une certaine limite.

A la **figure 3** est illustrée une représentation graphique de la force F nécessaire pour obtenir une rupture de l'adhésif, et ce en fonction de la longueur L de la surface de contact de l'adhésif avec les substrats (i.e. longueur séparant les repères A et B). Il convient de noter que la force F appliquée à la rupture augmente linéairement jusqu'à une valeur limite Fₘ correspondant à une longueur limite lₘ à partir de laquelle la force appliquée pour une rupture est sensiblement identique.

Cette stabilisation de la force F à la rupture à partir d'une certaine longueur de surface d'adhésion est en grande partie causée par les effets de bord qui persistent à fortement déformer et contraindre l'adhésif en ses bords, fragilisant localement l'adhésif et entrainant son décollement des substrats par ruine adhésive ou cohésive.

Pour limiter les effets de bord, il peut être prévu d'amener un surplus de matière adhésive (sous forme d'un bourrelet d'adhésif par exemple) de part et d'autre de la surface d'adhésion pour améliorer la résistance de l'adhésif aux bords. Toutefois, l'application d'un surplus de matière peut s'avérer difficile à réaliser dans certaines configurations, occasionnant une incertitude quant au comportement exact au voisinage des bords suite aux ajouts d'adhésif. En outre, cette réalisation est plus onéreuse, nécessitant des précautions supplémentaires lors de l'installation et/ou la fabrication. Le bénéfice obtenu est en outre assez limité.

A titre d'exemple, lorsque l'adhésif est installé entre une structure et un élément de renfort de la structure, il convient d'effectuer l'opération d'ajout de surplus d'adhésif sur site, ce qui peut être contraignant voire impossible du fait des conditions extérieures ou de la configuration de la structure.

En outre, il convient de noter que la nécessité pour un adhésif d'assurer les fonctions susmentionnées (adhésion aux substrats et absorption des déformations) peuvent se révéler antagonistes. En effet, il est généralement observé que plus un adhésif est souple (i.e. meilleure capacité d'absorption), plus les capacités d'adhésion sont diminuées. De façon générale, les adhésifs les plus raides procurent les meilleures capacités d'adhésion mais sont plus sensibles aux contraintes en déformation.

### Résumé de l'invention

La présente invention vient améliorer la situation.

L'invention vise à écarter certaines des limitations des techniques précitées et vise notamment à fournir un assemblage collé qui soit fiable, pérenne, avec des capacités structurelles améliorées permettant en particulier de supporter des déformations importantes localisées.

A cet effet, selon un premier aspect, l'invention concerne un assemblage collé comprenant au moins :
- un premier et un deuxième substrat,
- une couche intermédiaire solidarisée au premier substrat, et ayant une souplesse variable le long du premier substrat, la souplesse variable résultant d'une variation d'épaisseur d'au moins un matériau de la couche intermédiaire,
- un adhésif entre ladite couche intermédiaire et le deuxième substrat.

La souplesse variable procure à l'ensemble couche intermédiaire et adhésif, des capacités d'absorption des déformations pouvant varier le long du premier substrat. Ces variations de souplesse permettent de maitriser localement le niveau de déformation, et donc les contraintes.

Le comportement en déformation peut notamment être contrôlé de sorte à répartir plus uniformément des contraintes en cisaillement et en pelage, lesquelles sont habituellement localisées au voisinage des bords de l'adhésif (comme expliqué précédemment).

Ainsi, les déformations locales sont efficacement absorbées par la couche intermédiaire dont la souplesse est maitrisée, les bords de l'adhésif étant alors moins exposés aux efforts engendrés par des forces extérieures appliquées à l'assemblage collé. Les effets de bord sont de ce fait notablement réduits, augmentant d'autant les capacités de résistance et d'intégrité de l'adhésif, et renforçant la solidarisation des substrats et les capacités structurelles de l'assemblage collé. La force nécessaire pour obtenir une rupture est dès lors bien plus élevée que dans l'état de la technique. On comprend que l'assemblage collé est ainsi moins vulnérable à des efforts en déformation.

Il convient de noter que la souplesse de la couche intermédiaire, bien que variable, est avantageusement, en tout point de la couche, supérieure à la souplesse des substrats et de l'adhésif.

Selon un mode de réalisation, la souplesse de la couche intermédiaire est progressivement variable le long du premier substrat.

Selon un mode de réalisation, la couche intermédiaire est en un matériau homogène.

Selon un mode de réalisation particulièrement avantageux, la couche intermédiaire présente deux extrémités longitudinales, la couche intermédiaire pouvant comporter au moins :
- une première portion disposée au moins à une des extrémités longitudinales; et
- une deuxième portion plus rigide que la première portion comprise entre les extrémités longitudinales.

On entend par « portion » une partie localisée de la couche intermédiaire pour laquelle un niveau de souplesse souhaité a été attribué lors de la fabrication.

Par ailleurs, il convient de comprendre par « extrémité longitudinale » une zone qui, dans le sens de la longueur de la couche intermédiaire, est en bordure de cette couche. Cette zone peut par exemple être une zone partant d'un bord de la couche intermédiaire, et ayant une longueur comprise entre 5 et 30% de la longueur de la couche intermédiaire.

Dans ce mode de réalisation, les bords souples de la couche intermédiaire absorbent tout particulièrement les déformations aux bords, soulageant sensiblement l'adhésif des contraintes en cisaillement et en pelage habituellement subies sans la couche intermédiaire.

L'ensemble couche intermédiaire et adhésif confère dès lors une solidarisation robuste des substrats.

Dans une réalisation avantageuse, la couche intermédiaire peut comporter au moins :
- une première couche et
- une deuxième couche plus souple que la première couche.

En outre, les première et deuxième couches peuvent être d'épaisseur variable le long de la couche intermédiaire.

La variation d'épaisseur des couches de souplesses distinctes permet de réguler la souplesse générale de l'ensemble couche intermédiaire et adhésif et de l'approprier selon le comportement souhaité de l'ensemble couche intermédiaire et adhésif.

La première couche peut notamment avoir une rigidité comprise entre 1000 et 300000 MPa et la deuxième couche peut quant à elle avoir une rigidité comprise entre 1 et 1000 MPa.

Selon une réalisation possible, la variation d'épaisseur d'une des première et deuxième couches peut suivre un profil chanfreiné, et la variation d'épaisseur de l'autre des première et deuxième couches peut suivre un profil complémentaire du profil chanfreiné.

Dans cette réalisation, les profils chanfreinés et complémentaires des première et deuxième couches permettent de faire varier la souplesse de la couche intermédiaire de manière progressive le long de la couche intermédiaire. Cette réalisation assure une bonne maitrise du comportement en déformation et en absorption de la couche intermédiaire, et ce sur toute sa longueur.

Selon une réalisation avantageuse, le profil chanfreiné est conformé selon au moins une pente comprise entre 0,01% et 50%.

On entend par « pente » une inclinaison constante du profil chanfreiné ou une pente moyenne d'une inclinaison variable du profil.

Selon une autre réalisation possible, la couche intermédiaire présente une ou plusieurs alvéoles.

Dans ce mode de réalisation, les alvéoles peuvent être dimensionnées et réparties le long de la couche intermédiaire en fonction de la variation souhaitée de la souplesse le long de la couche intermédiaire.

Avantageusement, la couche intermédiaire peut comporter en outre au moins une couche adhésive avec le deuxième substrat. Avantageusement, la couche intermédiaire peut être à base d'un matériau choisi parmi des polymères tels que :
- un époxyde ;
- un élastomère ;
- un plastique ;
- du polyuréthane ;
- un composite.

Le matériau de la couche intermédiaire peut être choisi en fonction des affinités avec le matériau de l'adhésif.

Par ailleurs, les première et deuxième couches de la couche intermédiaire, l'adhésif et la couche adhésive sont avantageusement composées d'un même matériau choisi dans la liste ci-dessus. De par leur matériau, les couches bénéficient alors d'affinités adhésives entre elles qui permettent de renforcer encore la résistance de l'assemblage collé.

Ces couches de même matériau peuvent en revanche avoir des souplesses différentes, voire variables le long des couches.

Avantageusement, un intervalle entre les substrats comporte, autour de la couche intermédiaire, un joint disposé de sorte à être comprimé par les substrats maintenus l'un par rapport à l'autre par l'intermédiaire de l'adhésif.

Le joint comprimé permet d'isoler l'ensemble couche intermédiaire et adhésif du milieu qui environne l'assemblage collé. Cet isolement assuré par le joint conserve cet ensemble dans des conditions d'utilisation qui permettent de garantir une bonne durabilité. On peut ainsi choisir le matériau de la couche intermédiaire et de l'adhésif en fonction des propriétés recherchées et des compositions des substrats à maintenir l'un par rapport à l'autre, tout en étant confiant dans l'obtention effective et durable de ces propriétés.

Dans une réalisation possible, l'un des substrats peut être un élément rigide renforçant l'autre substrat par collage via l'adhésif.

Selon un deuxième aspect, l'invention concerne un procédé de fabrication d'un élément d'un assemblage collé, le procédé comprenant :
- former une première couche présentant un profil chanfreiné,
- verser un matériau sous forme liquide dans un moule comprenant la première couche de profil chanfreiné ;
- former une deuxième couche par solidification du matériau versé, la deuxième couche une fois solidifiée étant plus souple que la première couche,
la première couche et la deuxième couche formant ensemble une couche intermédiaire à placer entre deux substrats dans l'assemblage collé.

Dans une réalisation possible, la première couche est formée sur un support consistant en l'un des substrats précités.

Dans une réalisation possible, le matériau liquide est versé sur la première couche en étant contenu en périphérie par un joint compressible. Une fois solidifié, le matériau souple versé forme alors la deuxième couche, laquelle deuxième couche est délimitée par le joint.

La couche intermédiaire peut être amenée par collage pour une solidarisation avec les substrats. D'autres techniques de fabrication peuvent être utilisées en alternative de la technique ci-dessus. La couche intermédiaire peut notamment être intégrée au substrat par collage à partir de techniques choisies parmi :
- le moulage,
- l'usinage,
- l'extrusion,
- ou autre.

Avantageusement, le procédé peut comprendre en outre une étape de traitement de surfaces de la couche intermédiaire (CID) suite à la formation des première et deuxième couches. Ce traitement de surfaces permet d'améliorer les capacités d'adhésion de la couche intermédiaire avec l'adhésif et/ou la couche adhésive.

Le traitement de surface de la couche intermédiaire peut être notamment réalisé via des techniques :
- mécaniques (technique de ponçage typiquement) ;
- physiques (par laser, flammage, élévation en température, exposition UV/ozone, plasma, effet corona ou autre) ; ou
- chimiques (primaire d'adhésion par exemple).

Les capacités d'adhésion de la couche intermédiaire avec les couches adhésives sont particulièrement améliorées lorsque la couche intermédiaire est à base de polyuréthane.

Dans une autre application d'un assemblage collé selon l'invention, il est proposé un procédé de renforcement d'une structure comportant au moins un substrat, le procédé comprenant:
- solidariser avec un substrat de renforcement une couche intermédiaire ayant une souplesse variable le long du substrat de renforcement, la souplesse résultant d'une variation d'épaisseur d'au moins un matériau de la couche intermédiaire, et
- maintenir le substrat de renforcement et la couche intermédiaire sur le substrat à renforcer par l'intermédiaire d'un adhésif.

Avantageusement, le procédé peut comprendre en outre, lors de la solidarisation de l'élément rigide avec le substrat, une compression du joint disposé à l'intervalle de débordement.

### Brève description des figures

D'autres caractéristiques et avantages de l'invention apparaîtront à l'examen de la description détaillée ci-après, et des dessins annexés sur lesquels :
- les figure 1A à 1C illustrent des exemples de réalisations typiques d'un assemblage collé, et représentent les déformations et contraintes de cisaillement classiquement subies par l'adhésif, notamment en ses bords ;
- les figures 2A à 2C illustrent des exemples de réalisations d'un élément de renfort collé à une structure, générant des déformations et contraintes semblables aux exemples des figures 1A à 1C ;
- la figure 3 représente l'évolution, en fonction de la longueur en recouvrement de deux substrats de l'interface d'adhésion de l'adhésif, de la force ultime à appliquer pour obtenir une rupture de l'adhésif d'assemblage collé classique ;
- les figures 4A à 4C illustrent des exemples d'un assemblage collé selon l'invention, et représentent les contraintes moindres subies par l'adhésif ;
- les figures 5A, 5A', 5B et 5B' illustrent des exemples d'assemblage collé selon une première réalisation possible;
- la figure 6 illustre un exemple d'assemblage collé selon une deuxième réalisation possible; et
- la figure 7 représente une étape de fabrication de l'assemblage collé selon l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

### Description détaillée

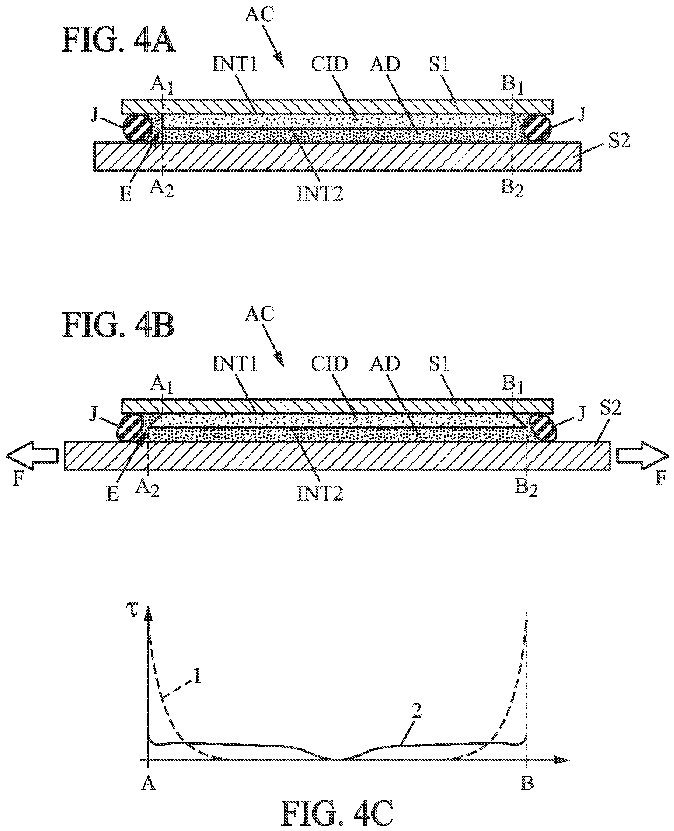

On se réfère aux **figures 4A à 4C** sur lesquelles sont illustrés des exemples d'un assemblage collé AC selon l'invention. L'assemblage comporte un premier substrat S1 et un deuxième substrat S2.

Dans l'exemple représenté, le premier substrat S1 est un élément de renfort destiné à réparer, protéger et/ou renforcer une structure comportant le deuxième substrat S2. L'élément de renfort peut prendre la forme d'une plaque superposée à une paroi de la structure, typiquement une plaque métallique, en composite ou tout autre matériau de rigidité suffisante pour renforcer la structure.

L'assemblage AC comprend une couche intermédiaire CID, dite de « déformation », et un adhésif AD, lesquels forment un ensemble E. L'adhésif AD est disposé entre les substrats S1 et S2 et il est destiné à les solidariser l'un avec l'autre par l'intermédiaire de la couche CID. L'adhésif AD comporte des interfaces d'adhésion avec le substrat S2 et la couche CID. La couche CID comporte quant à elle une première interface de solidarisation INT1 avec le substrat S1, et une deuxième interface de solidarisation INT2 avec l'adhésif AD. La couche CID a une souplesse variable le long des interfaces INT1 et INT2. Les repères A et B représentent les limites des interfaces INT1 et INT2 de l'adhésif AD (les repères A₁, B₁ et A₂, B₂ étant respectivement les repères relatifs aux interfaces INT1 et INT2).

Dans cet exemple purement illustratif de l'assemblage collé AC, la couche CID est de souplesse variable le long des interfaces INT1 et INT2.

La couche CID et l'adhésif AD peuvent être réalisés à base d'un même matériau. De surcroit, la couche et l'adhésif peuvent être réalisés avec des densités différentes de ce même matériau de sorte à conférer des niveaux de souplesse distincts. La souplesse de la couche CID peut en particulier avoir un module d'élasticité, encore appelé module d'Young ou rigidité, plus faible que celui de l'adhésif AD.

Le matériau utilisé peut en particulier être choisi parmi la liste suivante de polymères:
- un époxyde ;
- un élastomère ;
- un plastique ;
- du polyuréthane ; ou
- un composite.

Lors des tests réalisés par l'inventeur, l'utilisation d'époxy et polyuréthane s'est avérée particulièrement efficace, notamment quand la couche CID et/ou les couches adhésives se composent de plusieurs couches. En effet, les affinités adhésives entre des couches d'époxy (de même souplesse ou de souplesse différente) confèrent d'excellentes capacités adhésives entre les couches.

En outre, un traitement de surface peut se révéler bénéfique pour améliorer l'adhésion, notamment pour les matériaux comme le polyuréthane. Le traitement de surface peut être réalisé par l'intermédiaire de techniques telles qu'une technique de ponçage de la couche, de traitement par laser, par flammage, par élévation en température, par rayons UV/ozone, par plasma, par effet corona, ou par primaire d'adhésion par exemple.

La couche CID à souplesse variable permet de maitriser plus précisément le comportement de la couche face aux contraintes en déformation, de sorte que ses capacités d'absorption sont mieux contrôlées le long de sa forme allongée.

Une description physique de la « souplesse variable » pourrait être faite en caractérisant cette souplesse par un paramètre égal à l'inverse de la raideur. La raideur peut être vue comme le produit du module d'Young de la couche intermédiaire par sa section. Compte tenu des contraintes essentiellement en cisaillement auxquelles l'invention s'adresse, la couche intermédiaire possède avantageusement une souplesse axiale variable le long du premier substrat ou encore une souplesse en cisaillement variable.

L'adhésif AD peut être relativement rigide et présente quant à lui de bonnes capacités d'adhésion :
- avec le substrat S2, en raison de sa rigidité ; et
- avec la couche CID grâce aux affinités adhésives de leur matériau.

La couche intermédiaire CID de déformation permet ainsi d'améliorer :
- l'absorption des déformations différentielles aux extrémités longitudinales de la forme allongée de l'adhésif AD (par l'intermédiaire de la couche CID) ; et
- les capacités générales d'adhésion aux interfaces INT1 et INT2 avec les substrats (par l'intermédiaire de l'adhésif AD soulagé des contraintes en déformation).

La couche CID à souplesse variable permet en l'occurrence d'obtenir un comportement maitrisé qui réparti plus uniformément les contraintes en cisaillement et en pelage générées par des forces extérieures F appliquées à l'assemblage collé AC.

Le comportement en absorption de déformations atteint par l'ensemble E de l'assemblage collé AC permet ainsi de réduire, voire de supprimer, les effets de bord survenant habituellement au niveau de l'adhésif AD dans l'état de la technique.

A la figure 4C, on a illustré les contraintes en cisaillement (τ) subies par la ou les couches solidarisant les deux substrats S1 et S2, avec:
- une courbe 1 représentant les contraintes subies par un adhésif classique,
- une courbe 2 représentant les contraintes subies par l'ensemble E avec la couche CID à souplesse variable le long de ses interfaces de solidarisation INT1 et INT2.

On constate que l'ensemble E (courbe 3) absorbe plus efficacement les déformations différentielles aux bords que les réalisations correspondant aux courbes 1 et 2. Les pics de valeur des contraintes en cisaillement τ disparaissent en effet, remplacés par des contraintes moins élevées et plus uniformément réparties entre les repères A et B. Les transferts d'efforts sont ainsi répartis plus uniformément sur des zones plus étendues, évitant les conséquences inhérentes aux fortes contraintes localisées habituellement aux bords.

Un joint J peut être en outre disposé entre les substrats S1 et S2, au niveau d'un intervalle de débordement des substrats S1 et S2. L'intervalle de débordement est défini par l'espace compris entre les substrats, au-delà des interfaces INT1 et INT2 avec la couche CID. Dans l'intervalle de débordement, qui peut être rempli d'adhésif AD, on comprend donc que le substrat S1 est en regard du substrat S2.

Le joint J peut être installé tout autour de l'ensemble E, notamment lorsque les substrats S1 et S2 débordent de part et d'autre des interfaces INT1 et INT2.

Le joint J disposé dans l'intervalle de débordement est en particulier conformé de sorte à être comprimé par les substrats S1 et S2 solidarisés par l'adhésif. L'ensemble E maintient l'écartement entre les substrats S1 et S2 de sorte que les substrats appliquent de façon permanente un effort de compression sur le joint J. Le joint J ainsi comprimé permet de protéger l'adhésif du milieu extérieur à l'assemblage collé AC.

Lorsque le joint J entoure complètement l'ensemble E, l'adhésif AD et la couche CID sont confinés dans un espace étanche délimité par les substrats S1 et S2 ainsi que le joint J. On comprend que de ce fait l'adhésif et la couche intermédiaire peuvent être préservés dans des conditions idéales de fonctionnement (pas d'agression du milieu extérieur), ce qui améliore la durabilité de leurs capacités élastiques et adhésives. Les performances souhaitées pour l'ensemble E sont ainsi conservées durablement, et ce même si l'assemblage collé est installé dans un milieu contraignant, tel que le milieu marin par exemple.

Dans une réalisation particulièrement avantageuse, la couche CID peut être réalisée de sorte à ce que ses capacités d'absorption de déformations soient élevées au voisinage des bords de l'adhésif.

De cette manière, la fonction d'absorption des déformations différentielles est correctement assurée aux bords, zones qui, comme décrit ci-avant, sont généralement les plus sensibles du fait de leur exposition à des pics de contraintes en cisaillement et en pelage.

Pour le renforcement structurel, l'assemblage collé AC peut être installé sur une structure comportant le substrat S2 à renforcer (tel qu'un module de plate-forme pétrolière par exemple) via un élément rigide tel que le substrat S1. Le procédé d'installation de l'assemblage collé AC comprend alors au moins les étapes de :
- solidarisation sur le substrat S1 de la couche CID, laquelle couche CID a une souplesse variable le long du substrat S1, et
- maintient par l'intermédiaire de l'adhésif AD du substrat S2.

Lorsque l'ensemble E solidarise l'élément rigide S1 et le substrat S2, il convient de prévoir une compression du joint J disposé dans l'intervalle de débordement.

Selon d'autres configurations possibles, il convient de noter que l'élément rigide S1, la couche CID et l'adhésif AD peuvent adopter la forme du substrat S2 lorsque celui-ci forme un angle ou une surface courbe.

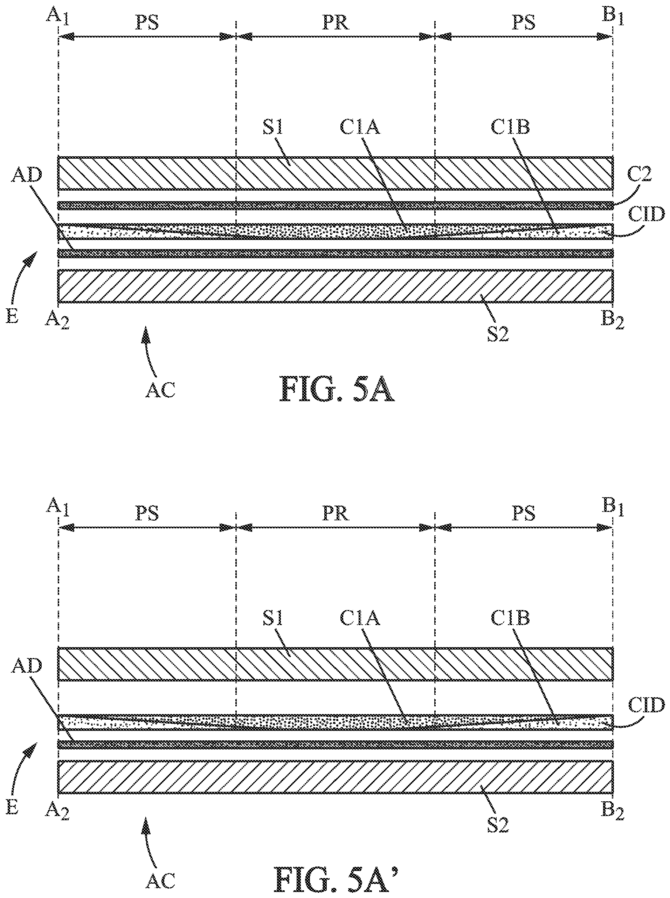

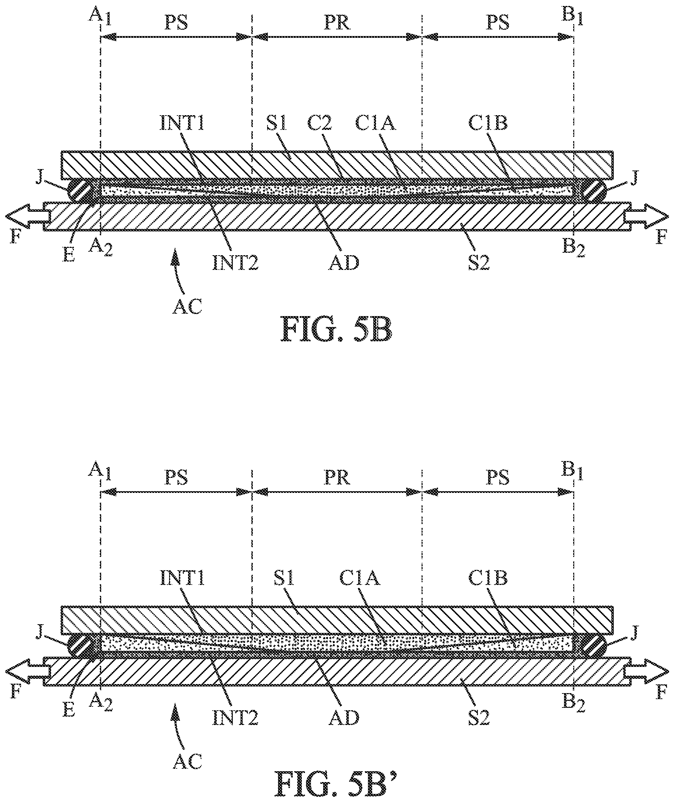

On se réfère maintenant aux **figures 5A** **et** **5B** sur lesquelles on a représenté un premier mode de réalisation de la couche intermédiaire à souplesse variable. La couche CID comprend une première couche C1A rigide, et une deuxième couche C1B souple. Les matériaux des couches C1A et C1B peuvent être identiques (comme expliqué plus haut) mais avec des niveaux de souplesse différents (par l'intermédiaire d'une densité de matériau différente par exemple).

Typiquement, la couche C1A peut être d'une rigidité comprise entre 1000 et 300000 MPa alors que la couche C1B peut être d'une rigidité comprise entre 1 et 1000 MPa.

Les couches C1A et C1B peuvent avoir des épaisseurs variables de sorte à conférer à la couche CID une souplesse variable et progressive le long de la forme allongée de la couche CID.

La variation d'épaisseur des couches C1A et C1B peut être réalisée selon un profil chanfreiné et un profil complémentaire du profil chanfreiné.

Dans une configuration possible, la couche C1A adopte le profil chanfreiné et la couche C1B est réalisée selon un profil complémentaire du profil de la couche C1A. Etant donné que la couche C1A est plus rigide que la couche C1B, on comprend que, dans cet exemple de configuration, la couche CID comporte :
- deux portions souples PS, chacune respectivement au niveau d'une des extrémités longitudinales de la forme allongée de la couche CID ; et
- une portion rigide PR comprise entre les extrémités longitudinales.

En outre, l'ensemble peut comporter une couche C2 disposée à l'interface INT1 avec le substrat S1. La couche C2 est par exemple une couche en époxy d'une rigidité d'environ 3000 MPa. La rigidité de la couche C2 assure de bonnes conditions d'adhésion à l'interface de solidarisation entre la couche CID et le substrat S1.

Il convient de noter que le profil en chanfrein peut être prévu selon différentes pentes. A titre d'exemple, la pente du profil chanfreiné peut être d'une pente comprise entre 0,01% et 50%, de préférence entre 0,01% et 20%. La pente peut correspondre à une inclinaison constante du profil chanfreiné ou à une pente moyenne d'une inclinaison variable du profil.

Par ailleurs, selon une autre configuration possible, la variation d'épaisseur des première et deuxième couches C1A, C1B de la couche CID peut être réalisée selon d'autres formes, par exemple une forme curviligne, selon la variation de souplesse souhaitée pour l'adhésif.

On se réfère maintenant aux **figures 5A'** **et** **5B'** sur lesquelles on a représenté un autre exemple dans lequel la couche CID est directement solidarisée avec un des substrats (en l'occurrence ici le substrat S1). Cette solidarisation directe peut être réalisée notamment lorsque la couche intermédiaire est faite de couches de matériaux rigides tels que des fibres de verre ou de carbone pré-imprégnés de résine et d'une résine qui peut être coulée sur le substrat.

Selon un mode de réalisation compatible avec le procédé décrit ci-après, la couche intermédiaire CID peut être constituée d'un seul matériau d'épaisseur variable, par exemple une couche en un matériau homogène dont l'épaisseur décroit progressivement depuis une première portion PR vers des deuxièmes portions PS situées aux extrémités longitudinales de la couche CID et plus souples que les premières portions.

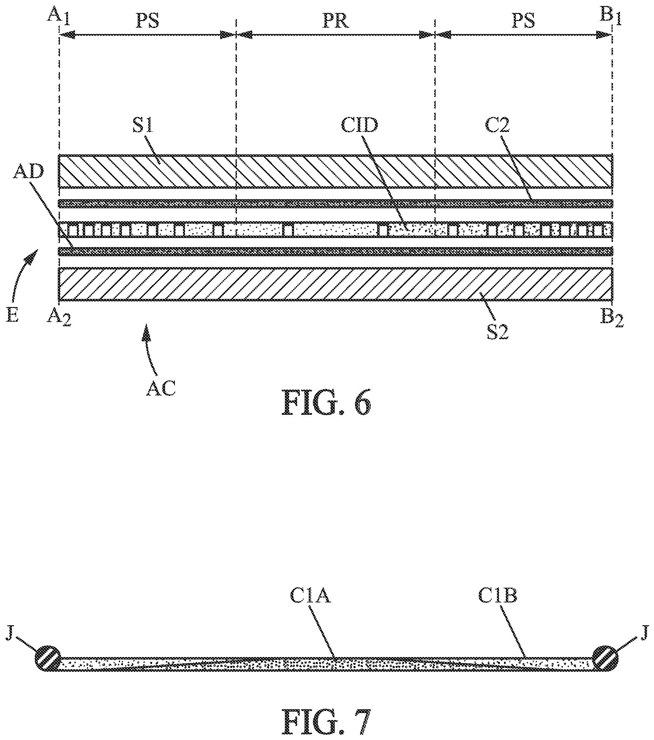

On se réfère à la **figure 6** sur laquelle on a illustré une autre réalisation possible de l'adhésif AD. La souplesse variable de la couche CID est obtenue en formant des alvéoles de forme, de dimensionnement et de répartition appropriée pour obtenir une souplesse souhaitée le long de la couche CID. Cette réalisation de la couche CID permet elle aussi de maitriser localement l'absorption de déformations, notamment en vue de lisser le profil des contraintes en cisaillement et en pelage.

La couche CID est conformée pour que les alvéoles soient plus particulièrement situées à proximité des extrémités longitudinales de la forme allongée de l'adhésif AD. De cette manière, la couche CID est composée de moins de matière au niveau de ses bords, ce qui la rend plus souple sur les portions PS, et plus rigide sur la portion PR, répartissant plus uniformément les contraintes en cisaillement et en pelage le long de l'adhésif AD.

Dans cette réalisation, les alvéoles peuvent être usinées dans la couche CID dès la phase de fabrication de la couche.

A la **figure 7****,** il est représenté une étape du procédé de fabrication d'une couche intermédiaire de déformation ayant une souplesse variable selon l'exemple de réalisation des figures 5A, 5A', 5B et 5B'. Sur cette figure, la couche CID est illustrée selon une vue retournée (« tête en bas ») par rapport à la couche CID sur les figures précédentes. A cette étape du procédé, la couche C1A a été formée par superposition de couches de matériau rigide tel que des fibres de verre ou de carbone pré-imprégnées de résine (selon une technique de dépôt par drapage par exemple) et un matériau souple, sous sa forme liquide, a été versé dans un moule dans lequel sont disposés au préalable le joint J et la couche C1A. Le joint J permet notamment de contenir le liquide versé afin de former la deuxième couche C1B de la couche CID. Le joint J peut par ailleurs être déformé par compression lors de l'opération de fabrication de la couche CID. Après solidification du matériau souple versé, le matériau solidifié constitue la couche C1B. Le matériau souple constituant alors la couche C1B peut être une couche d'époxy de faible densité. Lors de la fabrication, la superposition successive des couches constituant CA1 permet de définir précisément les variations d'épaisseur de la couche, de sorte à décrire un profil idéal pour maitriser la répartition des contraintes en cisaillement et pelage au sein de la couche CID.

Le procédé peut bien entendu être mis en oeuvre de sorte à ce que la couche C1A soit solidarisée soit au premier substrat S1 soit au deuxième substrat S2.

Les techniques de fabrication de la couche CID sont mises en oeuvre directement par les unités de production et ne nécessitent pas d'opérations complémentaires comme celles décrites plus haut relativement à l'état de la technique.

Un traitement de surface de la couche CID peut se révéler bénéfique pour améliorer l'adhésion avec l'adhésif AD et la couche C2.

Par ailleurs, d'autres techniques de fabrication peuvent être mises en oeuvre pour obtenir la couche CID (moulage, usinage, extrusion, etc.).

Il convient en outre de noter que pour améliorer les résultats conférés par l'assemblage collé proposé, une augmentation de la longueur d'ancrage peut impliquer plus de longueur utile. Aussi, l'assemblage collé convient particulièrement aux assemblages collés et renforts véhiculant des efforts importants et bénéficiant de larges surfaces de contact (i.e. longues interfaces d'adhésion).

On note que les applications de l'assemblage collé selon l'invention peuvent être très variées. On peut par exemple citer :
- les connexions pour support d'un nouvel élément sur une installation marine ou maritime, notamment pétrolière ;
- les connexions pour support d'un nouvel élément à placer sous l'eau, par exemple sur des coques d'une plateforme pétrolière ;
- les connexions temporaires de pose sur une installation offshore ;
- les renforts de structure (pan de mur, poutre, poteau ou autre) ;
- réparation d'une zone structurelle endommagée (par la corrosion typiquement) ;
- réparation d'une canalisation, y compris sous-marine ;
- réparation, renforcement et/ou connexion sur des ouvrages industriels, des aéronefs, des navires, des véhicules ou autre.

Bien entendu, la présente invention ne se limite pas aux formes de réalisation décrites ci-avant à titre d'exemple et elles s'étendent à d'autres variantes. A ce titre, selon un autre mode de réalisation, les couches composant la couche intermédiaire de déformation peuvent comporter par exemple un profil chanfreiné dans lequel des alvéoles sont en outre prévues. Une telle réalisation de l'assemblage collé peut notamment permettre d'affiner la maitrise du comportement en déformation de l'adhésif, notamment aux bords.

## Revendications

1. Assemblage collé (AC) comprenant au moins :
- un premier substrat (S1),
- un deuxième substrat (S2),
- une couche intermédiaire (CID) solidarisée au premier substrat et ayant une souplesse variable le long du premier substrat, la souplesse variable résultant d'une variation d'épaisseur d'au moins un matériau de la couche intermédiaire,
- un adhésif (AD) entre ladite couche intermédiaire et le deuxième substrat.

2. Assemblage collé (AC) selon la revendication 1, dans lequel la souplesse de la couche intermédiaire (CID) est progressivement variable le long du premier substrat.

3. Assemblage collé (AC) selon la revendication 2, dans lequel la couche intermédiaire (CID) en un matériau homogène.

4. Assemblage collé (AC) selon l'une quelconque des revendications 1 à 3, dans lequel la couche intermédiaire (CID) présente deux extrémités longitudinales, la couche intermédiaire comportant au moins :
- une première portion (PS) disposée au moins à une des extrémités longitudinales ; et
- une deuxième portion (PR) plus rigide que la première portion, comprise entre les extrémités longitudinales.

5. Assemblage collé (AC) selon l'une quelconque des revendications précédentes, dans lequel la couche intermédiaire (CID) comporte au moins :
- une première couche (C1A) et
- une deuxième couche (C1B) plus souple que la première couche ;
les première et deuxième couches étant d'épaisseur variable le long de la couche intermédiaire.

6. Assemblage collé (AC) selon la revendication 5, dans lequel la première couche (C1A) est d'une rigidité comprise entre 1000 et 300000 MPa.

7. Assemblage collé (AC) selon l'une quelconque des revendications 5 ou 6, dans lequel la deuxième couche (C1B) est d'une rigidité comprise entre 1 et 1000 MPa.

8. Assemblage collé (AC) selon l'une quelconque des revendications 5 à 7, dans lequel la variation d'épaisseur d'une des première et deuxième couches (C1A, C1B) suit un profil chanfreiné, et la variation d'épaisseur de l'autre des première et deuxième couches suit un profil complémentaire dudit profil chanfreiné.

9. Assemblage collé (AC) selon la revendication 8, dans lequel le profil chanfreiné est conformé selon au moins une pente comprise entre 0,01% et 50%, de préférence entre 0,01% et 20%.

10. Assemblage collé (AC) selon l'une quelconque des revendications précédentes, dans lequel la couche intermédiaire (CID) présente une ou plusieurs alvéoles.

11. Assemblage collé (AC) selon l'une quelconque des revendications précédentes, dans lequel un intervalle entre les substrats (S1, S2) comporte, autour de la couche intermédiaire (CID), un joint (J) disposé de sorte à être comprimé par lesdits substrats maintenus l'un par rapport à l'autre par l'intermédiaire de l'adhésif (AD).

12. Procédé de fabrication d'un élément d'un assemblage collé (AC), le procédé comprenant :
- former une première couche (C1A) présentant un profil chanfreiné,
- verser un matériau sous forme liquide dans un moule comprenant la première couche de profil chanfreiné ;
- former une deuxième couche (C1B) par solidification du matériau versé, la deuxième couche une fois solidifiée étant plus souple que la première couche,
la première couche et la deuxième couche formant ensemble une couche intermédiaire (CID) à placer entre deux substrats (S1, S2) dans l'assemblage collé.

13. Procédé de fabrication selon la revendication 12, dans lequel la première couche est formée sur un support consistant en l'un desdits substrats (S1).

14. Procédé de fabrication selon la revendication 12 ou la revendication 13, dans lequel le matériau liquide est versé sur la première couche en étant contenu en périphérie par un joint compressible.

15. Procédé de renforcement d'une structure comportant au moins un substrat à renforcer (S2), le procédé comprenant :
- solidariser avec un substrat de renforcement (S1) une couche intermédiaire (CID) ayant une souplesse variable le long du substrat de renforcement, la souplesse variable résultant d'une variation d'épaisseur d'au moins un matériau de la couche intermédiaire, et
- maintenir le substrat de renforcement et la couche intermédiaire sur le substrat à renforcer par l'intermédiaire d'un adhésif (AD).

## Patentansprüche

1. Verbundene Anordnung (AC), wenigstens umfassend:
- ein erstes Substrat (S1),
- ein zweites Substrat (S2),
- eine an dem ersten Substrat angebrachte und eine entlang des ersten Substrats variable Biegsamkeit aufweisende Zwischenschicht (CID), wobei die variable Biegsamkeit aus einer Variation einer Dicke von wenigstens einem Material der Zwischenschicht resultiert,
- ein Haftmittel (AD) zwischen der Zwischenschicht und dem zweiten Substrat.

2. Verbundene Anordnung (AC) nach Anspruch 1, wobei die Biegsamkeit der Zwischenschicht (CID) entlang des ersten Substrats progressiv variabel ist.

3. Verbundene Anordnung (AC) nach Anspruch 2, wobei die Zwischenschicht (CID) aus einem homogenen Material ist.

4. Verbundene Anordnung (AC) nach einem der Ansprüche 1 bis 3, wobei die Zwischenschicht (CID) zwei longitudinale Enden aufweist, wobei die Zwischenschicht wenigstens umfasst:
- einen ersten Abschnitt (PS), welcher an wenigstens einem der longitudinalen Enden angeordnet ist; und
- einen zweiten Abschnitt (PR), welcher steifer als der erste Abschnitt ist, welcher zwischen den longitudinalen Enden angeordnet ist.

5. Verbundene Anordnung (AC) nach einem der vorhergehenden Ansprüche, wobei die Zwischenschicht (CID) wenigstens umfasst:
- eine erste Schicht (C1 A) und
- eine zweite Schicht (C1 B), welche biegsamer als die erste Schicht ist; wobei die erste und die zweite Schicht entlang der Zwischenschicht von variabler Dicke sind.

6. Verbundene Anordnung (AC) nach Anspruch 5, wobei die erste Schicht (C1A) von einer Steifigkeit ist, welche zwischen 1000 und 300000 MPa beträgt.

7. Verbundene Anordnung (AC) nach einem der Ansprüche 5 oder 6, wobei die zweite Schicht (C1 B) von einer Steifigkeit ist, welche zwischen 1 und 1000 MPa beträgt.

8. Verbundene Anordnung (AC) nach einem der Ansprüche 5 bis 7, wobei die Variation der Dicke von einer aus der ersten und zweiten Schicht (C1 A, C1 B) einem abgeschrägten Profil folgt, und wobei die Variation der Dicke der anderen aus der ersten und zweiten Schicht einem zu dem abgeschrägten Profil komplementären Profil folgt.

9. Verbundene Anordnung (AC) nach Anspruch 8, wobei das abgeschrägte Profil gemäß einer Steigung gebildet ist, welche zwischen 0,01% und 50% beträgt, vorzugsweise zwischen 0,01% und 20%.

10. Verbundene Anordnung (AC) nach einem der vorhergehenden Ansprüche, wobei die Zwischenschicht (CID) einen oder mehrere Hohlräume aufweist.

11. Verbundene Anordnung (AC) nach einem der vorhergehenden Ansprüche, wobei ein Abstand zwischen den Substraten (S1, S2) um die Zwischenschicht (CID) herum eine Dichtung (J) umfasst, welche derart angeordnet ist, dass sie durch die Substrate komprimiert wird, welche das eine bezüglich dem anderen mittels des Haftmittels (AD) gehalten werden.

12. Verfahren zum Herstellen eines Elements einer verbundenen Anordnung (AC) wobei das Verfahren umfasst:
- Bilden einer ersten Schicht (C1A), welche ein abgeschrägtes Profil aufweist,
- Eingeben eines Materials in flüssiger Form in eine Gussform, welche die erste Schicht mit abgeschrägtem Profil enthält;
- Bilden einer zweiten Schicht (C1 B) durch Aushärten des eingegebenen Materials, wobei die zweite Schicht, sobald sie ausgehärtet ist, biegsamer als die erste Schicht ist,
wobei die erste Schicht und die zweite Schicht zusammen eine Zwischenschicht (CID) zum Anordnen zwischen zwei Substraten (S1, S2) in einer verbundenen Anordnung bilden.

13. Verfahren zum Herstellen nach Anspruch 12, wobei die erste Schicht an einem Träger gebildet wird, welcher aus einem der Substrate (S1) besteht.

14. Verfahren zum Herstellen nach Anspruch 12 oder Anspruch 13, wobei das flüssige Material auf die an ihrem Rand durch eine komprimierbare Dichtung eingeschlossene erste Schicht aufgebracht wird.

15. Verfahren zum Verstärken einer Struktur, welche wenigstens ein zu verstärkendes Substrat (S2) umfasst, wobei das Verfahren umfasst:
- Verbinden einer Zwischenschicht (CID) mit einem Verstärkungssubstrat (S1), welche eine variable Biegsamkeit entlang des Verstärkungssubstrats aufweist, wobei die variable Biegsamkeit aus einer Variation einer Dicke von wenigstens einem Material der Zwischenschicht resultiert, und
- Halten des Verstärkungssubstrats und der Zwischenschicht an dem zu verstärkenden Substrat mittels eines Haftmittels (AD).

## Claims

1. Bonded assembly (AC) comprising at least:
- a first substrate (S1),
- a second substrate(S2),
- an intermediate layer (CID) rigidly connected to the first substrate and having a variable flexibility along the first substrate, the variable flexibility resulting from a variation of thickness of at least one material of the intermediate layer,
- an adhesive (AD) between said intermediate layer and the second substrate.

2. Bonded assembly (AC) according to claim 1, wherein the flexibility of the intermediate layer (CID) is progressively variable along the first substrate.

3. Bonded assembly (AC) according to claim 2, wherein the intermediate layer (CID) is of a homogeneous material.

4. Bonded assembly (AC) according to any of claims 1 to 3, wherein the intermediate layer (CID) has two longitudinal ends, the intermediate layer comprising at least:
- a first portion (PS) arranged at one at least of the longitudinal ends; and
- a second portion (PR) that is more rigid than the first portion, between the longitudinal ends.

5. Bonded assembly (AC) according to any of preceding claims, wherein the intermediate layer (CID) comprises at least:
- a first layer (C1A) and
- a second layer (C1B) that is more flexible than the first layer;
the first and second layers being of a variable thickness along the intermediate layer.

6. Bonded assembly (AC) according to claim 5, wherein the first layer (C1A) is of a rigidity between 1000 and 300,000 MPa.

7. Bonded assembly (AC) according to any of claims 5 or 6, wherein the second layer (C1B) is of a rigidity between 1 and 1000 MPa.

8. Bonded assembly (AC) according to any of claims 5 to 7, wherein the variation of thickness of one of the first and second layers (C1A, C1B) follows a chamfered profile, and the variation of thickness of the other one of the first and second layers follows an additional profile of said chamfered profile.

9. Bonded assembly (AC) according to claim 8, wherein the chamfered profile is conformed according to at least one slope between 0.01% and 50%, more preferably between 0.01% and 20%.

10. Bonded assembly (AC) according to any of preceding claims, wherein the intermediate layer (CID) has one or several cells.

11. Bonded assembly (AC) according to any of preceding claims, wherein an interval between the substrates (S1, S2) comprises, around the intermediate layer (CID), a seal (J) arranged in such a way as to be compressed by said substrates maintained with respect to one another by the intermediary of the adhesive (AD).

12. Method for manufacturing an element of a bonded assembly (AC), the method comprising:
- forming a first layer (C1A) presenting a chamfered profile,
- pouring a material in liquid form into a mould comprising the first layer of the chamfered profile;
- forming a second layer (C1B) via solidification of the material poured, the second layer once solidified being more flexible than the first layer,
the first layer and the second layer together forming an intermediate layer (CID) to be placed between two substrates (S1, S2) in the bonded assembly.

13. Method for manufacturing according to claim 12, wherein the first layer is formed on a support consisting in one of said substrates (S1).

14. Method for manufacturing according to claim 12 or claim 13, wherein the liquid material is poured on the first layer by being contained in periphery by a compressible seal.

15. Method for reinforcing a structure comprising at least one substrate to be reinforced (S2), the method comprising:
- rigidly connecting with a reinforcing substrate (S1) an intermediate layer (CID) having a variable flexibility along the reinforcing substrate, the variable flexibility resulting from a variation of thickness of at least one material of the intermediate layer, and
- maintaining the reinforcing substrate and the intermediate layer on the substrate to be reinforced by the intermediary of an adhesive (AD).
